# EUROPEAN PATENT APPLICATION

(11) **EP 4 510 285 A1**
(43) Date of publication of application: **19.02.2025**
(21) Application number: 22964733.4
(22) Date of filing: 08.11.2022
(51) Int. Cl.: H01M 10/058, H01M 10/052, H01M 50/547, H01M 50/586, H01M 50/593

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: ZHOU, Wenlin, Ningde, Fujian 352100 (CN); XU, Liangfan, Ningde, Fujian 352100 (CN); ZHANG, Qianqian, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/130666
(87) International publication number: WO 2024/098258

(57) **Abstract**

Provided are a battery cell (20), a battery (100), and an electrical device, relating to the technical field of batteries. The battery cell (20) comprises a housing (21), an electrode assembly (22), and a first insulating member (23). The housing (21) comprises a first wall (211) and a second wall (212) arranged opposite to each other in a first direction (X), and the first wall (211) is provided with an electrode terminal (25); the electrode assembly (22) is accommodated in the housing (21), the electrode assembly (22) is electrically connected to the electrode terminal (25), and the electrode assembly (22) is supported by the first wall (211); the first insulating member (23) abuts against the end of the electrode assembly (22) facing the second wall (212); in the first direction (X), a gap (24) is formed between the surface of the first insulating member (23) facing away from the electrode assembly (22) and the inner surface of the second wall (212). Compared with a conventional battery cell, the battery cell (20) is in an inverted state, and the gap (24) reduces the risk that an electrode sheet of the electrode assembly (22) is pressed and wrinkled by a corner area (2151a) of the housing (21). The degree of pressing of the electrode assembly (22) by the corner area (2151a) of the housing (21) can be reduced or the electrode assembly (22) is enabled not to come contact with or not to be pressed by the corner area (2151a) of the housing (21) without the need to provide a bottom support plate, thereby reducing the risk of short circuit of the battery cell (20).

## Description

### TECHNICAL FIELD

This application relates to the field of battery technologies, and specifically, to a battery cell, a battery, and an electric device.

### BACKGROUND

At present, with the rapid development of smart phones, tablet computers, and electric vehicles, the application of lithium-ion batteries is also becoming increasingly extensive. Consequently, higher requirements are imposed on lithium-ion batteries. For example, batteries are required to have better safety performance, and internal short circuits of batteries are one of the main causes of electrical safety issues.

Short circuits of batteries may generate excessive electric heat, leading to high temperatures that may cause fires or burn out electrical appliances, thereby threatening safety of property and life. Therefore, how the risk of short circuits of batteries is reduced has become an urgent problem to be solved in the field of battery technologies.

### SUMMARY

Embodiments of this application provide a battery cell, a battery, and an electric device, so as to reduce the risk of a short circuit of a battery.

According to a first aspect, an embodiment of this application provides a battery cell including a housing, an electrode assembly, and a first insulating member, where the housing includes a first wall and a second wall disposed opposite each other in a first direction, where the first wall is provided with an electrode terminal; the electrode assembly is accommodated in the housing, the electrode assembly is electrically connected to the electrode terminal, and the first wall supports the electrode assembly; the first insulating member abuts against an end of the electrode assembly facing the second wall to insulate and isolate the second wall from the electrode assembly; and in the first direction, a gap is formed between a surface of the first insulating member facing away from the electrode assembly and an inner surface of the second wall.

In the foregoing technical solution, the first wall provided with the electrode terminal supports the electrode assembly, so that the battery cell in this solution is in an inverted state compared to a traditional battery cell, that is, the electrode terminal faces downwards. Under the action of gravity, the electrode assembly is supported entirely by the first wall. Due to the action of gravity combined with a manufacturing tolerance of the electrode assembly, a gap is formed between a side of the first insulating member facing away from the electrode assembly and the inner surface of the second wall, where the first insulating member abuts against the end of the electrode assembly facing the second wall. The gap reduces the risk of an electrode plate of the electrode assembly being pressed and wrinkled by a corner region at an end of the housing facing away from the first wall. Therefore, without the need to provide a bottom support plate at an end of the electrode assembly facing away from the first wall, a degree of pressing and contact between the electrode assembly and a corner region of a side of the housing facing away from the electrode terminal can be reduced or the electrode assembly can be prevented from coming into contact with and being pressed by the corner region of the housing, thereby reducing the risk of the electrode plate of the electrode assembly being pressed and wrinkled by the corner region of the housing due to pressing between the electrode assembly and the corner region of the housing. Consequently, the risk of a short circuit of the battery cell is reduced. In addition, if the battery cell is not provided with the bottom support plate, the assembly process of the battery cell can be simplified, the assembly efficiency can be improved, the cost of the battery cell can be reduced, and the weight of the battery cell can be reduced. The first insulating member insulates and isolates the second wall from the electrode assembly, which can not only reduce the risk of a short circuit of the battery cell caused by contact between the electrode assembly and the second wall, but also reduce the risk of electrochemical corrosion of the second wall caused by metal ions of the electrode assembly reaching the second wall.

In some embodiments of the first aspect of this application, the housing further includes a side wall, where the side wall surrounds a periphery of the second wall; in the first direction, the second wall is located at one end of the side wall, an opening is formed at another end of the side wall, and the first wall closes the opening; and the inner surface of the second wall is connected to an inner surface of the side wall through a chamfered face.

In the foregoing technical solution, the inner surface of the second wall is connected to the inner surface of the side wall through the chamfered face, which is conducive to the connection between the second wall and the side wall to form the housing and reduces the risk of stress concentration between the second wall and the side wall. Therefore, the structural strength of the housing is improved. The chamfered face forms the corner region at the end of the housing facing away from the first wall. The gap is formed between the surface of the first insulating member facing away from the electrode assembly and the inner surface of the second wall, so that the risk of the electrode plate of the electrode assembly being wrinkled due to pressing between the electrode assembly and the chamfered face is reduced, thereby reducing the risk of a short circuit of the battery cell and improving the safety performance of the battery cell and a battery with the battery cell.

In some embodiments of the first aspect of this application, in the first direction, a size of the chamfered face is H, and a size of the gap is H₁, satisfying H₁ ≥ H/2.

In the foregoing technical solution, in the first direction, the size H of the chamfered face and the distance H₁ between the first insulating member and the inner surface of the second wall satisfy H₁ ≥ H/2, so as to prevent the electrode assembly from being pressed by the chamfered face or to reduce a degree of pressing on the electrode assembly by the chamfered face, thereby reducing the risk of the electrode plate being wrinkled due to pressing on the electrode assembly by the chamfered face.

In some embodiments of the first aspect of this application, H₁ ≥ H.

In the foregoing technical solution, H₁ ≥ H, therefore, a projection of the electrode assembly in a direction perpendicular to the first direction is offset from the chamfered face, the first insulating member completely avoids the chamfered face, and both the electrode assembly and the first insulating member may not be in contact with the chamfered face. As a result, the electrode plate will not be pressed and wrinkled by the chamfered face, thereby avoiding a short circuit of the battery cell caused by the electrode plate being pressed and wrinkled by the chamfered face.

In some embodiments of the first aspect of this application, the chamfered face is an arc chamfered face.

In the foregoing technical solution, the chamfered face is the arc chamfered face, which can not only avoid stress concentration, but also facilitate processing and molding.

In some embodiments of the first aspect of this application, the inner surface of the second wall is tangent to the chamfered face; and/or the inner surface of the side wall is tangent to the chamfered face.

In the foregoing technical solution, the inner surface of the second wall is tangent to the chamfered face, so that there is no edge at a position of connection between the inner surface of the second wall and the chamfered face, which can avoid significant wear on the first insulating member due to scraping against the first insulating member at the position of connection between the inner surface of the second wall and the chamfered face; and/or the inner surface of the side wall is tangent to the chamfered face, so that there is no edge at a position of connection between the inner surface of the side wall and the chamfered face, which can avoid significant wear on the first insulating member and damage to a separator of the electrode assembly due to scraping against the first insulating member and the electrode assembly at the position of connection between the inner surface of the side wall and the chamfered face.

In some embodiments of the first aspect of this application, the side wall and the second wall are integrally formed.

In the foregoing technical solution, the side wall and the second wall are integrally formed, which facilitates the manufacturing and shaping of the housing, and is also conducive to improving the structural strength of the housing.

In some embodiments of the first aspect of this application, the battery cell further includes a second insulating member, at least a part of the second insulating member is arranged between the side wall and the electrode assembly, and the second insulating member is configured to insulate and isolate the side wall from the electrode assembly.

In the foregoing technical solution, the second insulating member insulates and isolates the side wall from the electrode assembly, which can not only reduce the risk of a short circuit of the battery cell caused by contact between the electrode assembly and the side wall, but also reduce the risk of electrochemical corrosion of the side wall caused by metal ions of the electrode assembly reaching the side wall.

In some embodiments of the first aspect of the application, the first insulating member and the second insulating member are integrally formed.

In the foregoing technical solution, the first insulating member and the second insulating member are integrally formed, providing better connection strength between the first insulating member and the second insulating member. The integral structure formed by the first insulating member and the second insulating member can provide better insulation and isolation between the electrode assembly and the housing, further reducing the risk of a short circuit of the battery cell.

In some embodiments of the first aspect of this application, the battery cell further includes a third insulating member, where in the first direction, the third insulating member abuts against a side of the first insulating member facing the second wall; and in the direction perpendicular to the first direction, the first insulating member protrudes from an edge of the third insulating member.

In the foregoing technical solution, in the direction perpendicular to the first direction, the first insulating member protrudes from the edge of the third insulating member, so that a gap not occupied by the third insulating member is still formed between a surface of the first insulating member facing the second wall and the inner surface of the second wall. This gap is close to a corner region at an end of the housing away from the first wall in the first direction, reducing the risk of the electrode plate of the electrode assembly being pressed and wrinkled by the corner region at the end of the housing facing away from the first wall. The provision of the third insulating member can limit a range of movement of the electrode assembly in the first direction in the housing, which is conducive to improving the stability of the electrical performance of the battery cell.

In some embodiments of the first aspect of this application, the third insulating member is connected to a surface of the first insulating member facing the second wall.

In the foregoing technical solution, the third insulating member is connected to the first insulating member, which can improve the stability of the third insulating member relative to the first insulating member and reduce the risk of the movement of the third insulating member between the first insulating member and the second wall.

In some embodiments of the first aspect of this application, the electrode assembly includes a first tab and a second tab with opposite polarities, and in the first direction, the first tab and the second tab are located on a side of the electrode assembly facing away from the second wall.

In the foregoing technical solution, both the first tab and the second tab are located on the side of the electrode assembly facing away from the second wall, which is conducive to the output of electrical energy of the battery cell from the first tab and the second tab separately, and can also minimize a size of the electrode assembly in the first direction.

In some embodiments of the first aspect of this application, the electrode assembly further includes a main body portion, and both the first tab and the second tab protrude from the main body portion; and the battery cell further includes a support member, where the support member is arranged between the first wall and the main body portion.

In the foregoing technical solution, the support member is arranged between the first wall and the main body portion, where the support member is conducive to limiting the electrode assembly and can reduce the risk of the movement of the electrode assembly in the housing. Under a condition that both the first tab and the second tab protrude from the main body portion and face the first wall, the support member can also reduce the risk of the tab being inserted backward into the main body portion, thereby reducing the risk of a short circuit of the battery cell.

In some embodiments of the first aspect of this application, the support member supports the main body portion, and both the first tab and the second tab are bent around an edge of the support member to a side of the support member facing away from the main body portion and are electrically connected to the electrode terminal.

In the foregoing technical solution, the support member supporting the main body portion can limit the electrode assembly in the housing, thereby reducing a degree of shaking of the electrode assembly in the housing. The first tab and the second tab are bent around the edge of the support member to the side of the support member facing away from the main body portion, so that the support member provides support for the first tab and the second tab, preventing the first tab and the second tab from being inserted backward into the main body portion.

In some embodiments of the first aspect of this application, the first wall is further provided with at least one of a pressure relief mechanism and an electrolyte injection hole.

In the foregoing technical solution, at least one of the pressure relief mechanism and the electrolyte injection hole is provided on the first wall, so that structures of the battery cell are more concentrated, which facilitates manufacturing and is conducive to improving production efficiency.

According to a second aspect, an embodiment of this application further provides a battery including the battery cell according to the embodiments of the first aspect.

In the foregoing technical solution, in the battery cell according to the embodiments of the first aspect, the gap is formed between the side of the first insulating member facing away from the electrode assembly and the inner surface of the second wall, where the first insulating member abuts against the end of the electrode assembly facing the second wall. Therefore, without the need to provide the bottom support plate at the end of the electrode assembly facing away from the first wall, the degree of pressing and contact between the electrode assembly and the corner region of the side of the housing facing away from the electrode terminal can be reduced or the electrode assembly can be prevented from coming into contact with and being pressed by the corner region of the housing, thereby reducing the risk of the electrode plate of the electrode assembly being pressed and wrinkled by the corner region of the housing due to pressing between the electrode assembly and the corner region of the housing. Consequently, the risk of a short circuit of the battery cell is reduced, improving the safety performance of the battery. When the battery cell is not provided with a bottom support plate, the assembly process of the battery cell can be simplified, the assembly efficiency can be improved, the cost of the battery cell can be reduced, and the weight of the battery cell can be reduced, which can consequently reduce the weight of the battery.

According to a third aspect, an embodiment of this application further provides an electric device including the battery provided in embodiments of the second aspect.

In the foregoing technical solution, the battery in the second aspect has good safety performance, thus the electrical safety of the electric device having the battery can be improved.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a battery cell provided in the related art;
FIG. 2 is an exploded view of the battery cell in FIG. 1;
FIG. 3 is a cross-sectional view along A-A in FIG. 1;
FIG. 4 is a schematic structural diagram of a vehicle according to some embodiments of this application;
FIG. 5 is an exploded view of a battery according to some embodiments of this application;
FIG. 6 is a structure of a battery cell according to some embodiments of this application;
FIG. 7 is an exploded view of a battery cell according to some embodiments of this application;
FIG. 8 is cross-sectional view along B-B in FIG. 6;
FIG. 9 is a cross-sectional view of a battery cell according to some other embodiments of this application;
FIG. 10 is a cross-sectional view of a battery cell according to still some other embodiments of this application;
FIG. 11 is an enlarged view of position C in FIG. 10;
FIG. 12 is a schematic structural diagram of an electrode assembly according to some embodiments of this application;
FIG. 13 is an exploded view of a battery cell according to still some other embodiments of this application;
FIG. 14 is a cross-sectional view of a battery cell according to yet some other embodiments of this application; and
FIG. 15 is an enlarged view of position D in FIG. 14.

Reference signs: 1000. vehicle; 100. battery; 10. box; 11. first portion; 12. second portion; 20', 20. battery cell; 21', 21. housing; 211', 211. first wall; 212', 212. second wall; 2121. inner surface of second wall; 2122. outer surface of second wall; 213', 213. side wall; 2131. inner surface of side wall; 2132. outer surface of side wall; 214', 214. opening; 215. connecting wall; 2151. chamfered face; 2151a', 2151a. corner region; 21511. first end; 21512. second end; 2152. outer surface of connecting wall; 22', 22. electrode assembly; 221. first tab; 2211. first tab root region; 222. second tab; 2221. second tab root region; 223. main body portion; 23', 23. first insulating member; 24. gap; 25', 25. electrode terminal; 26. second insulating member; 27. third insulating member; 28. support member; 281. first edge; 282. second edge; 283. support surface; 2831. support part; 2832. edge part; 284. accommodating part; 285. degassing hole; 286. through hole; 29. current collecting member; 210. pressure relief mechanism; 220. electrolyte injection hole; 230. fourth insulating member; 2301. convex part; 30'. bottom support plate; 200. controller; 300. motor; and X. first direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on the embodiments of this application without creative efforts shall fall within the protection scope of this application.

It should be noted that, without conflict, the embodiments and features in the embodiments in this application may be combined with each other.

It should be noted that similar reference numerals and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of the market development, application of traction batteries is becoming more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. The battery cell may be a steel shell battery cell or a pouch battery cell. This is not limited in the embodiments of this application either.

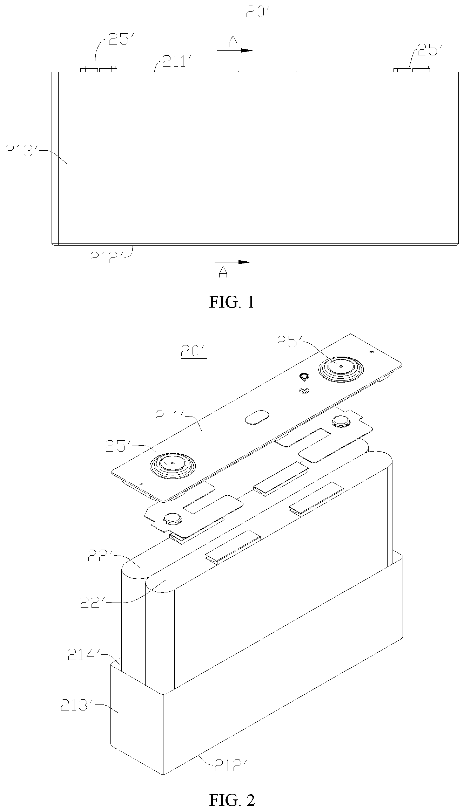

As shown in FIGs. 1, 2, and 3, the battery cell 20' includes a housing 21' and an electrode assembly 22'. The electrode assembly 22' is accommodated in the housing 21'. The housing 21' includes a first wall 211', a second wall 212', and a side wall 213', where the first wall 211' is provided with an electrode terminal 25', and the electrode terminal 25' is configured to be electrically connected to a tab of the electrode assembly 22'. The side wall 213' surrounds a periphery of the second wall 212', the second wall 212' is located at one end of the side wall 213', an opening 214' is formed at another end of the side wall 213', the second wall 212' supports the electrode assembly 22', and an end of the electrode assembly 22' facing the second wall 212' is connected to a first insulating member 23', where the first insulating member 23' can insulate and isolate the electrode assembly 22' from the second wall 212'.

The inventors have found that due to the presence of a corner region 2151a' between the side wall 213' and the second wall 212', and a spatial irregularity at the corner region 2151a', under the action of gravity, the electrode assembly 22' may sink towards the corner region 2151a'. As a result, the electrode assembly 22' may be pressed by the corner region 2151a', which may cause the wrinkling of an electrode plate of the electrode assembly 22', resulting in a short circuit of the battery cell 20'. To alleviate the problem that the electrode plate is wrinkled due to pressing on the electrode assembly 22' by the corner region 2151a', a bottom support plate 30' may be provided between the first insulating member 23' abutting against the end of the electrode assembly 22' facing the second wall 212' and the second wall 212', where the bottom support plate 30' increases a distance between the first insulating member 23' and the second wall 212' and in turn increases a distance between the electrode assembly 22' and the second wall 212', thereby reducing the risk of the electrode plate being wrinkled due to pressing of the electrode assembly 22' by the corner region 2151a'. However, the provision of the bottom support plate 30' increases the assembly process of the battery cell 20', reduces the assembly efficiency of the battery cell 20', increases the cost of the battery cell 20', and increases the weight of the battery cell 20'.

Based on the foregoing considerations, in order to alleviate the problem that the provision of the bottom support plate increases the assembly process of the battery cell, reduces the assembly efficiency of the battery cell, increases the cost of the battery cell, and increases the weight of the battery cell, through in-depth research, the inventors have designed a battery cell, where the battery cell supports the electrode assembly through the first wall provided with the electrode terminal, so that a gap is formed between the first insulating member abutting against the end of the electrode assembly facing the second wall and an inner surface of the second wall.

The first wall provided with the electrode terminal supports the electrode assembly, so the battery cell in this solution is in an inverted state compared to a traditional battery cell, that is, the electrode terminal facing downwards. Under the action of gravity, the electrode assembly is supported entirely by the first wall. Due to the action of gravity combined with a manufacturing tolerance of the electrode assembly, a gap is formed between a side of the first insulating member facing away from the electrode assembly and the inner surface of the second wall, where the first insulating member abuts against the end of the electrode assembly facing the second wall. The gap reduces the risk of the electrode plate of the electrode assembly being pressed and wrinkled by a corner region at an end of the housing facing away from the first wall. Therefore, without the need to provide a bottom support plate at an end of the electrode assembly facing away from the first wall, a degree of pressing and contact between the electrode assembly and a corner region of a side of the housing facing away from the electrode terminal can be reduced or the electrode assembly can be prevented from coming into contact with and being pressed by the corner region of the housing, thereby reducing the risk of the electrode plate of the electrode assembly being pressed and wrinkled by the corner region of the housing due to pressing between the electrode assembly and the corner region of the housing. Consequently, the risk of a short circuit of the battery cell is reduced.

In addition, if the battery cell is not provided with a bottom support plate, the assembly process of the battery cell can be simplified, the assembly efficiency can be improved, the cost of the battery cell can be reduced, and the weight of the battery cell can be reduced.

The first insulating member insulates and isolates the second wall from the electrode assembly, which can not only reduce the risk of a short circuit of the battery cell caused by contact between the electrode assembly and the second wall, but also reduce the risk of electrochemical corrosion of the second wall caused by metal ions of the electrode assembly 22 reaching the second wall.

The battery cell disclosed in the embodiments of this application may be used without limitation in an electric apparatus such as a vehicle, a ship, or an aircraft. The battery cell may further be used in a power supply system of an electric device having the battery cell and the battery disclosed in this application. This is conducive to reducing the risk of a short circuit of the battery cell caused by wrinkling of the electrode plate, and is also conducive to reducing weight of a battery having the battery cell and weight of an electric device having the battery.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

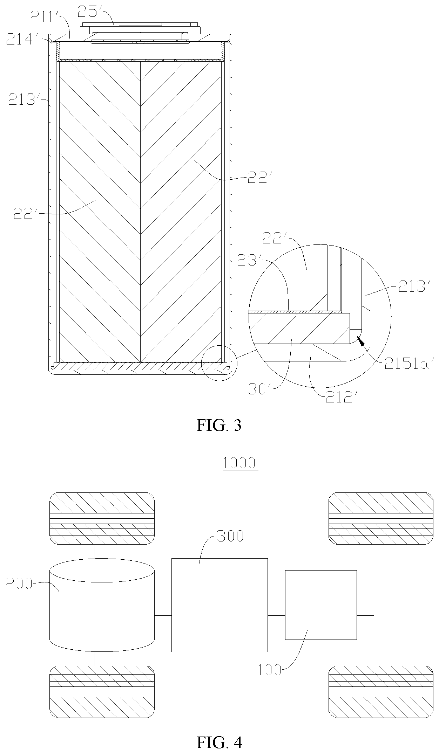

Referring to FIG. 4, FIG. 4 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

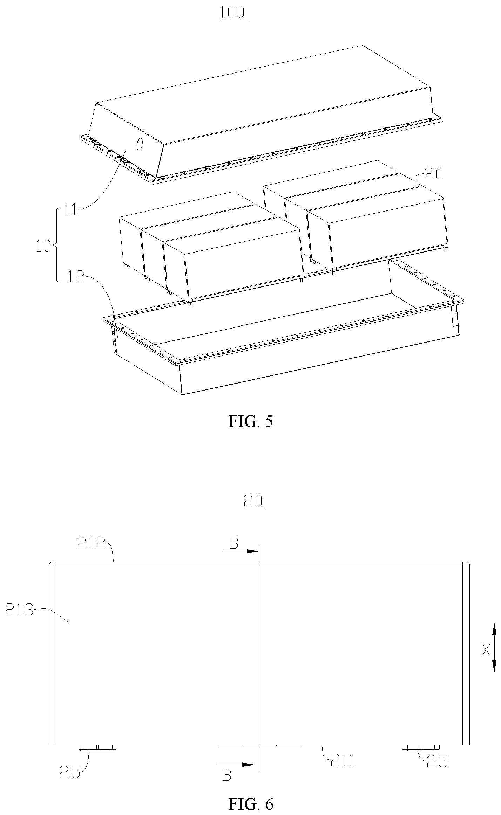

Referring to FIG. 5, FIG. 5 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define an accommodating space for accommodating the battery cell 20. The second portion 12 may be a hollow structure with one end open to form an accommodating cavity for accommodating the battery cell 20, and the first portion 11 may be a plate structure, where the first portion 11 covers the open side of the second portion 12 so that the first portion 11 and the second portion 12 jointly define the accommodating space; alternatively, the first portion 11 and the second portion 12 may both be hollow structures with one side open to form an accommodating cavity for accommodating the battery cell 20, where the open side of the first portion 11 is engaged with the open side of the second portion 12. Certainly, the box 10 formed by the first portion 11 and the second portion 12 may have a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further includes a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

Referring to FIGs. 6, 7, and 8, in some embodiments, the battery cell 20 includes a housing 21, an electrode assembly 22, and a first insulating member 23, where the housing 21 includes a first wall 211 and a second wall 212 disposed opposite each other in a first direction X, where the first wall 211 is provided with an electrode terminal 25; the electrode assembly 22 is accommodated in the housing 21, where the electrode assembly 22 is electrically connected to the electrode terminal 25, and the first wall 211 supports the electrode assembly 22; a first insulating member 23 abuts against an end of the electrode assembly 22 facing the second wall 212 to insulate and isolate the second wall 212 from the electrode assembly 22; and in the first direction X, a gap 24 is formed between a surface of the first insulating member 23 facing away from the electrode assembly 22 and an inner surface 2121 of the second wall.

A space for accommodating the electrode assembly 22 is formed inside the housing 21. The housing 21 may be made of various materials, for example, copper, iron, aluminum, stainless steel, aluminum alloy, and plastic. This is not particularly limited in the embodiments of this application. The first wall 211 and the second wall 212 are two opposite walls of the housing 21 along the first direction X. The first direction X is parallel to a thickness direction of the first wall 211. The first direction X is parallel to a thickness direction of the second wall 212.

The first direction X may be the direction of gravity. The first direction X may also be a direction approximately parallel to the direction of gravity, meaning that the first direction X may be allowed to deviate from the direction of gravity by a certain angle. The first wall 211 supporting the electrode assembly 22 means that the first wall 211 directly or indirectly bears the weight of the electrode assembly 22. The first wall 211 can bear the entire weight of the electrode assembly 22 or bear only a portion of the weight of the electrode assembly 22. In an embodiment where the first direction X is the direction of gravity, the first wall 211 can bear the entire gravity of the electrode assembly 22. In an embodiment where the first direction X deviates from the direction of gravity by a certain angle, the first wall 211 can bear only a portion of the weight of the electrode assembly 22, where the portion of the weight of the electrode assembly 22 borne by the first wall 211 is a component of the weight of the electrode assembly 22 in the first direction X.

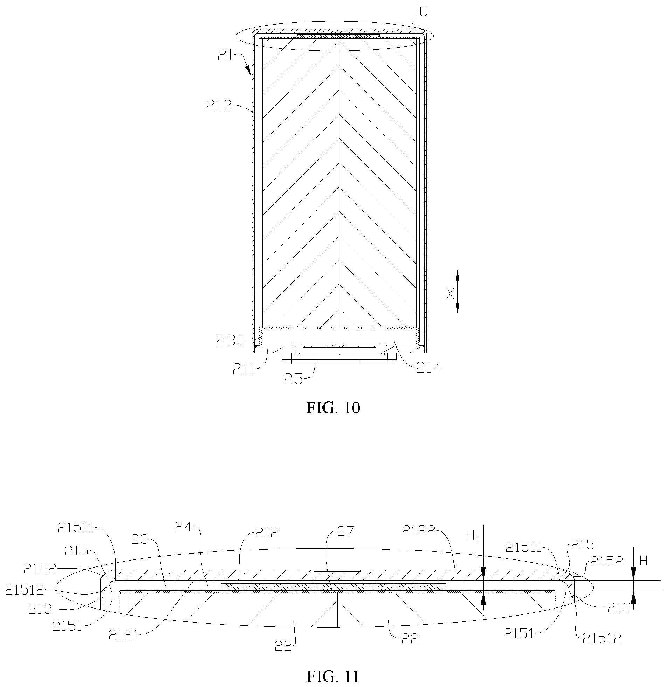

The electrode assembly 22 includes a positive electrode plate (not shown in the figure), a negative electrode plate (not shown in the figure), and a separator (not shown in the figure). Working of the battery 100 mainly relies on migration of metal ions back and forth between the positive electrode plate and the negative electrode plate. The positive electrode plate includes a positive electrode current collector and a positive electrode active substance layer. The positive electrode active substance layer is applied on a surface of the positive electrode current collector. In some embodiments, the positive electrode current collector also has a portion uncoated with the positive electrode active substance layer. The portion of the positive electrode current collector uncoated with the positive electrode active substance layer protrudes out of the portion of the positive electrode current collector coated with the positive electrode active substance layer and serves as a positive tab. In some other embodiments, the positive tab may alternatively be a structure arranged separately from the positive electrode current collector and then electrically connected to the positive electrode current collector. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer, where the negative electrode active substance layer is applied on a surface of the negative electrode current collector. In some embodiments, the negative electrode current collector also has a portion uncoated with the negative electrode active substance layer. The portion of the negative electrode current collector uncoated with the negative electrode active substance layer protrudes out of the portion of the negative electrode current collector coated with the negative electrode active substance layer and serves as a negative tab. In some other embodiments, the negative tab may alternatively be a structure arranged separately from the negative electrode current collector and then electrically connected to the negative electrode current collector. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The positive tab and the negative tab are a first tab 221 (shown in FIG. 10) and a second tab 222 (shown in FIG. 10) described below, respectively.

The positive tab and the negative tab may be located on a same side of the electrode assembly 22 in the first direction X, or may be located on different sides of the electrode assembly 22. For example, the positive tab and the negative tab are located on two opposite sides of the electrode assembly 22 in the first direction X, respectively.

The separator may be made of PP (polypropylene, polypropylene), PE (polyethylene, polyethylene), or the like. In addition, the electrode assembly 22 may be a wound structure or a laminated structure, but the embodiments of this application are not limited thereto.

The electrode terminal 25 is a functional component configured for outputting electrical energy of the battery cell 20. The electrode terminal 25 is insulated from the first wall 211. In the first direction X, an end of the electrode terminal 25 facing away from the interior of the battery cell 20 may protrude from a surface of the first wall 211 facing away from the interior of the battery cell 20. Certainly, in some other embodiments, in the first direction X, the end of the electrode terminal 25 facing away from the interior of the battery cell 20 may be flush with the surface of the first wall 211 facing away from the interior of the battery cell 20; alternatively, the end of the electrode terminal 25 facing away from the interior of the battery cell 20 may be closer to the interior of the battery cell 20 than the surface of the first wall 211 facing away from the interior of the battery cell 20.

The electrode terminal 25 is configured to be electrically connected to a tab of the electrode assembly 22. The battery cell 20 may include one electrode terminal 25, and the first wall 211 is provided with one electrode terminal 25. One of the positive tab and the negative tab is electrically connected to the electrode terminal 25, and the other may be electrically connected to the housing 21. The battery cell may include two electrode terminals 25, and the first wall 211 may be provided with two electrode terminals 25. The two electrode terminals 25 are configured to be electrically connected to the positive tab and the negative tab, respectively.

The first insulating member 23 may be made of rubber, ceramic, glass, mica, or the like. The first insulating member 23 may be attached to the end of the electrode assembly 22 facing the second wall 212 through adhesion or binding, so as to insulate and isolate the second wall 212 from the electrode assembly 22. The first insulating member 23 is only in contact with the end of the electrode assembly 22 facing the second wall 212, and remains in a state of contact with the electrode assembly 22, so as to insulate and isolate the second wall 212 from the electrode assembly 22.

The battery cell 20 may include one electrode assembly 22 or a plurality of electrode assemblies 22 stacked along a second direction, where the second direction may be any direction perpendicular to the first direction X. In an embodiment where the battery cell 20 includes a plurality of electrode assemblies 22, the first insulating member 23 covers an end of each electrode assembly 22 facing the second wall 212.

In the first direction X, a distance H₁ between the surface of the first insulating member 23 facing away from the electrode assembly 22 and the inner surface 2121 of the second wall is a size of the gap 24 formed between the surface of the first insulating member 23 facing away from the electrode assembly 22 and the inner surface 2121 of the second wall. The gap 24 does not mean that there is no substance inside the gap 24; the gap 24 may accommodate an electrolyte.

When the battery cell 20 is turned 180°, the gap 24 between the first insulating member 23 and the second wall 212 disappears, and the surface of the first insulating member 23 facing away from the electrode assembly 22 is in contact with the inner surface 2121 of the second wall, with no distance between the surface of the first insulating member 23 facing away from the electrode assembly 22 and the inner surface 2121 of the second wall, and the second wall 212 supports the electrode assembly 22.

The first insulating member 23 insulates and isolates the second wall 212 from the electrode assembly 22, which can not only reduce a risk of a short circuit of the battery cell 20 caused by contact between the electrode assembly 22 and the second wall 212, but also reduce a risk of electrochemical corrosion of the second wall 212 caused by metal ions of the electrode assembly 22 reaching the second wall 212.

The first wall 211 provided with the electrode terminal 25 supports the electrode assembly 22, so the battery cell 20 in this solution is in an inverted state compared to a traditional battery cell 20, that is, the electrode terminal 25 facing downwards. Under the action of gravity, the electrode assembly 22 is supported entirely by the first wall 211. The action of gravity combined with a manufacturing tolerance of the electrode assembly 22, a gap 24 is formed between a side of the first insulating member 23 facing away from the electrode assembly 22 and the inner surface 2121 of the second wall, where the first insulating member 23 abuts against the end of the electrode assembly 22 facing the second wall 212. The gap 24 reduces the risk of the electrode plate of the electrode assembly 22 being pressed and wrinkled by a corner region 2151a at an end of the housing 21 facing away from the first wall 211. Therefore, without the need to provide a bottom support plate at an end of the electrode assembly 22 facing away from the first wall 211, a degree of pressing and contact between the electrode assembly 22 and a corner region 2151a of a side of the housing 21 facing away from the electrode terminal 25 can be reduced or the electrode assembly 22 can even be prevented from coming into contact with and being pressed by the corner region 2151a of the housing 21, thereby reducing the risk of the electrode plate of the electrode assembly 22 being pressed and wrinkled by the corner region 2151a of the housing 21 due to pressing between the electrode assembly 22 and the corner region 2151a of the housing 21. Consequently, the risk of a short circuit of the battery cell 20 is reduced. In addition, if the battery cell 20 is not provided with the bottom support plate, the assembly process of the battery cell 20 can be simplified, the assembly efficiency can be improved, the cost of the battery cell 20 can be reduced, and the weight of the battery cell 20 can be reduced.

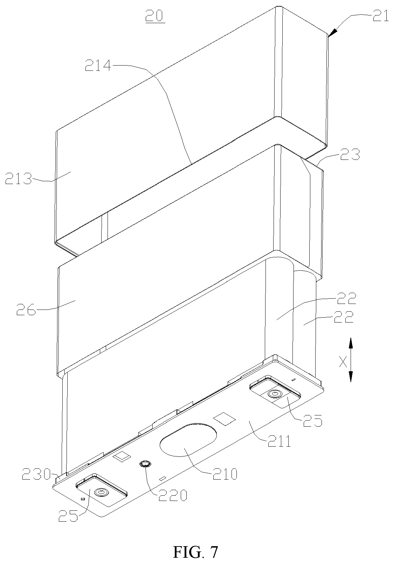

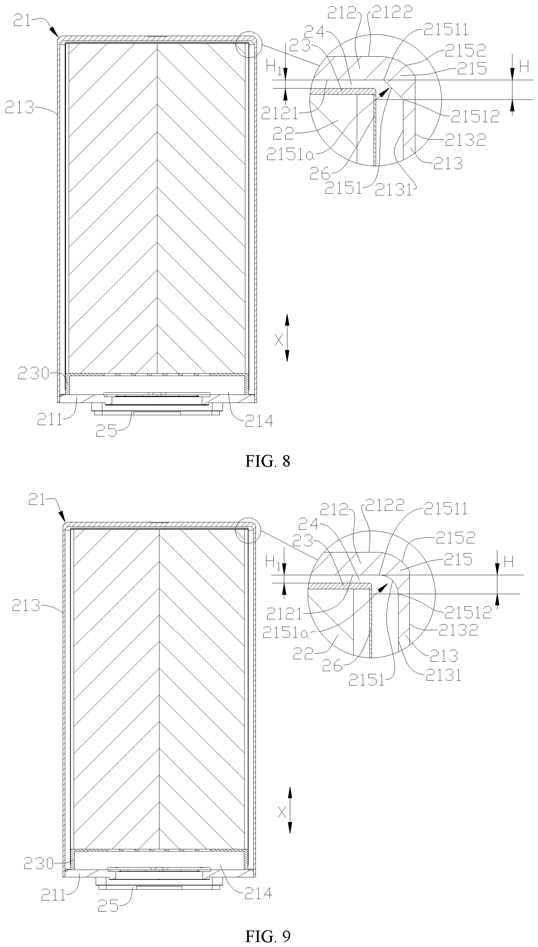

As shown in FIGs. 7 and 8, in some embodiments, the housing 21 further includes a side wall 213, where the side wall 213 surrounds a periphery of the second wall 212; in the first direction X, the second wall 212 is located at one end of the side wall 213, an opening 214 is formed at another end of the side wall 213, and the first wall 211 closes the opening 214; and the inner surface 2121 of the second wall is connected to an inner surface 2131 of the side wall through a chamfered face 2151.

The housing 21 further includes a connecting wall 215, where the side wall 213 and the second wall 212 are connected through the connecting wall 215. An outer surface 2122 of the second wall and an outer surface 2132 of the side wall are connected through an outer surface 2152 of the connecting wall. The chamfered face 2151 is an inner surface of the connecting wall 215.

The inner surface 2121 of the second wall is connected to the inner surface 2131 of the side wall through the chamfered face 2151, which is conducive to the connection between the second wall 212 and the side wall 213 to form the housing 21 and reduces the risk of stress concentration between the second wall 212 and the side wall 213. Therefore, the structural strength of the housing 21 is improved. The chamfered face 2151 forms the corner region 2151a at the end of the housing 21 facing away from the first wall 211. The gap 24 is formed between the surface of the first insulating member 23 facing away from the electrode assembly 22 and the inner surface 2121 of the second wall, so that the risk of the electrode plate of the electrode assembly 22 being wrinkled due to pressing between the electrode assembly 22 and the chamfered face 2151 is reduced, thereby reducing the risk of a short circuit of the battery cell 20 and improving the safety performance of the battery cell 20 and the battery 100 with the battery cell 20.

As shown in FIGs. 8 and 9, in some embodiments, in the first direction X, a size of the chamfered face 2151 is H, and the size of the gap 24 is H₁, satisfying H₁ ≥ H/2.

The chamfered face 2151 has a first end 21511 portion and a second end 21512 portion, where the first end 21511 portion connects to the inner surface of the first wall 211, and the second end 21512 portion connects to the inner surface 2131 of the side wall. In the first direction X, the size H of the chamfered face 2151 is a distance between the first end 21511 portion and the second end 21512 portion in the first direction X.

In the first direction X, the size H₁ of the gap 24 is a distance between the surface of the first insulating member 23 facing away from the electrode assembly 22 and the inner surface 2121 of the second wall.

As shown in FIGs. 8 and 9, the chamfered face 2151 being closer to the inner surface 2121 of the second wall in the first direction X leads to a smaller size of space of the chamfered face 2151 at a corresponding position in the second direction, leading to a higher risk of pressing between the first insulating member 23 and the chamfered face 2151. If the first insulating member 23 is pressed by the chamfered face 2151, since the first insulating member 23 is connected to the end of the electrode assembly 22 facing the second wall 212, the electrode assembly 22 will be indirectly pressed. In addition, during the charging and discharging process, the electrode assembly 22 may swell in any direction (second direction) perpendicular to the first direction X, and the risk of the electrode assembly 22 being pressed by the chamfered face 2151 after swelling is further increased. This leads to a high risk of the electrode plate of the electrode assembly 22 being wrinkled due to pressing. Especially, under a condition that the positive electrode plate is pressed and wrinkled, the risk of lithium precipitation and short circuit of the battery cell 20 is greatly increased.

Therefore, in the first direction X, the size H of the chamfered face 2151 and the distance H₁ between the first insulating member 23 and the inner surface 2121 of the second wall satisfy H₁ ≥ H/2, so as to prevent the electrode assembly 22 from being pressed by the chamfered face 2151 or to reduce a degree of pressing on the electrode assembly 22 by the chamfered face 2151, thereby reducing the risk of the electrode plate being wrinkled due to pressing on the electrode assembly 22 by the chamfered face 2151.

In some embodiments, H₁ ≥ H. In this case, the first insulating member 23 and the electrode assembly 22 are completely located on a side of the chamfered face 2151 facing away from the inner surface 2121 of the second wall in the first direction X. In a direction perpendicular to the first direction X (second direction), a projection of an integral structure formed by the electrode assembly 22 and the first insulating member 23 on the inner surface 2131 of the side wall is offset from a projection of the chamfered face 2151 on a plane where the inner surface 2131 of the side wall is located. Both the first insulating member 23 and the electrode assembly 22 before and after swelling are not pressed by the chamfered face 2151.

Therefore, when H₁ ≥ H, a projection of the electrode assembly 22 in a direction perpendicular to the first direction X is offset from the chamfered face 2151, the first insulating member 23 completely avoids the chamfered face 2151, and both the electrode assembly 22 and the first insulating member 23 may not be in contact with the chamfered face 2151. As a result, the electrode plate will not be pressed and wrinkled by the chamfered face 2151, thereby avoiding a short circuit of the battery cell 20 caused by the electrode plate being pressed and wrinkled by the chamfered face 2151.

As shown in FIG. 8, in some embodiments, the chamfered face 2151 may be a chamfered slope. In these embodiments, the chamfered face 2151 is a conical surface, and the chamfered face 2151 extends along an edge of the inner surface 2121 of the second wall to form a closed loop surface, where the first end 21511 of the chamfered face 2151 is a small end of the conical surface and is connected to the inner surface 2121 of the second wall, and the second end 21512 of the chamfered face 2151 is a big end of the conical surface and is connected to the inner surface 2131 of the side wall. The chamfered face 2151 being the chamfered slope can avoid stress concentration.

As shown in FIG. 9, in some other embodiments, the chamfered face 2151 is an arc chamfered face 2151. In this case, the chamfered face 2151 protrudes outward from the interior of the battery cell 20. The chamfered face 2151 extends along the edge of the inner surface 2121 of the second wall to form the closed loop surface. The chamfered face 2151 is an arc chamfered face 2151, which can not only avoid stress concentration, but also facilitate processing and molding.

In the embodiments where the chamfered face 2151 is the arc chamfered face 2151, the inner surface 2121 of the second wall is tangent to the chamfered face 2151; and/or the inner surface 2131 of the side wall is tangent to the chamfered face 2151.

It is possible for only the inner surface 2121 of the second wall to be tangent to the chamfered face 2151, while the inner surface 2131 of the side wall is connected to but not tangent to the chamfered face 2151. When the inner surface 2121 of the second wall is tangent to the chamfered face 2151, there is no edge at a position of connection between the inner surface 2121 of the second wall and the chamfered face 2151, which can avoid significant wear on the first insulating member 23 due to scraping against the first insulating member 23 by an edge formed at the position of connection between the inner surface 2121 of the second wall and the chamfered face 2151.

It is possible for only the inner surface 2131 of the side wall to be tangent to the chamfered face 2151, while the inner surface 2121 of the second wall is connected to but not tangent to the chamfered face 2151. When the inner surface 2131 of the side wall is tangent to the chamfered face 2151, there is no edge at a position of connection between the inner surface 2131 of the side wall and the chamfered face 2151, which can avoid significant wear on the first insulating member 23 and damage to the separator of the electrode assembly 22 due to scraping against the first insulating member 23 and the electrode assembly 22 by an edge formed at the position of connection between the inner surface 2131 of the side wall and the chamfered face 2151.

Certainly, it is possible for both the inner surface 2121 of the second wall and the inner surface 2131 of the side wall to be tangent to the chamfered face 2151. In this way, there is no edge at the position of connection between the inner surface 2121 of the second wall and the chamfered face 2151, as well as the position of connection between the inner surface of the side wall and the chamfered face 2151, which prevents scraping against the first insulating member 23 and the electrode assembly 22, reducing the risk of wear of the first insulating member 23 and the electrode assembly 22 within the housing 21.

In some embodiments, the side wall 213 and the second wall 212 are integrally formed.

The side wall 213 and the second wall 212 being integrally formed actually means that the side wall 213, the second wall 212, and the connecting wall 215 are integrally formed. The side wall 213, the second wall 212, and the connecting wall 215 form an integral structure through an integral molding method. Integral molding includes but is not limited to casting, stamping, and the like.

The side wall 213 and the second wall 212 are integrally formed, which facilitates the manufacturing and shaping of the housing 21, and is also conducive to improving the structural strength of the housing 21.

Still referring to FIGs. 7 to 9, in some embodiments, the battery cell 20 further includes a second insulating member 26, at least a portion of the second insulating member 26 is arranged between the side wall 213 and the electrode assembly 22, and the second insulating member 26 is configured to insulate and isolate the side wall 213 from the electrode assembly 22.

The second insulating member 26 may be made of rubber, ceramic, glass, mica, or the like.

The second insulating member 26 may be connected to the inner surface 2131 of the side wall. For example, the first insulating member 23 may be an insulation layer adhered to the inner surface 2131 of the side wall, or the second insulating member 26 may be an insulation coating layer applied on the inner surface 2131 of the side wall. The second insulating member 26 may be entirely located between the side wall 213 and the electrode assembly 22, or only a portion of the second insulating member 26 may be located between the side wall 213 and the electrode assembly 22.

The second insulating member 26 may alternatively be connected to the electrode assembly 22. For example, the second insulating member 26 is adhered to the electrode assembly 22, or the second insulating member 26 is bound to the electrode assembly 22.

In an embodiment where the battery cell 20 includes one electrode assembly 22, the second insulating member 26 may surround a periphery of the electrode assembly 22.

In an embodiment where the battery cell 20 includes a plurality of electrode assemblies 22 stacked along the second direction, the second insulating member 26 may surround a periphery of an integral structure formed by the plurality of electrode assemblies 22.

The second insulating member 26 insulates and isolates the side wall 213 from the electrode assembly 22, which can not only reduce a risk of a short circuit of the battery cell 20 caused by contact between the electrode assembly 22 and the side wall 213, but also reduce a risk of electrochemical corrosion of the side wall 213 caused by metal ions of the electrode assembly 22 reaching the side wall 213.

In some embodiments, the first insulating member 23 and the second insulating member 26 may be independent of each other. In some other embodiments, the first insulating member 23 and the second insulating member 26 may be separately arranged and then connected into an integral structure, and the connection mode may be adhesion, welding, or the like.

In still some other embodiments, the first insulating member 23 and the second insulating member 26 are integrally formed.

The first insulating member 23 and the second insulating member 26 form an integral structure through an integral molding method, where the integral molding method includes but is not limited to injection molding and stamping.

The first insulating member 23 and the second insulating member 26 together enclose a cavity for accommodating the electrode assembly 22, where the cavity is open on a side facing the first wall 211, and the positive tab and negative tab of the electrode assembly 22 extend from the open side of the cavity out of the cavity enclosed by the first insulating member 23 and the second insulating member 26.

The first insulating member 23 and the second insulating member 26 are integrally formed, providing better connection strength between the first insulating member 23 and the second insulating member 26. The integral structure formed by the first insulating member 23 and the second insulating member 26 can provide better insulation and isolation between the electrode assembly 22 and the housing 21, further reducing the risk of a short circuit of the battery cell 20.

The gap 24 formed between the surface of the first insulating member 23 facing the second wall 212 and the inner surface of the second wall 212 is not completely incapable of accommodating any substance. Therefore, as shown in FIGs. 10 and 11, in some embodiments, the battery cell 20 further includes a third insulating member 27, where in the first direction X, the third insulating member 27 abuts against a side of the first insulating member 23 facing the second wall 212; and in the direction perpendicular to the first direction X, the first insulating member 23 protrudes from an edge of the third insulating member 27.

The third insulating member 27 may be made of rubber, ceramic, glass, mica, or the like.

In the direction perpendicular to the first direction X, the first insulating member 23 protruding from the edge of the third insulating member 27 may be understood as a projection of the first insulating member 23 in a plane perpendicular to the first direction X covering a projection of the third insulating member 27 in the plane perpendicular to the first direction X. A gap 24 not occupied by the third insulating member 27 is formed between a portion of the first insulating member 23 extending beyond the edge of the third insulating member 27 and the second wall 212. The gap 24 surrounds the third insulating member 27 and corresponds to the corner region 2151a at the chamfered face 2151.

Therefore, in the direction perpendicular to the first direction X, the first insulating member 23 protrudes from an edge of the third insulating member 27, so that the gap 24 not occupied by the third insulating member 27 is still formed between the surface of the first insulating member 23 facing the second wall 212 and the inner surface 2121 of the second wall. This gap 24 is close to the corner region 2151a at an end of the housing 21 away from the first wall 211 in the first direction X, reducing the risk of the electrode plate of the electrode assembly 22 being pressed and wrinkled by the corner region 2151a at the end of the housing 21 facing away from the first wall 211.

In the first direction X, the surface of the third insulating member 27 facing away from the first insulating member 23 may be spaced apart from the inner surface 2121 of the second wall. In the first direction X, the surface of the third insulating member 27 facing away from the first insulating member 23 may alternatively abut against the inner surface 2121 of the second wall. The provision of the third insulating member 27 can limit a range of movement of the electrode assembly 22 in the first direction X in the housing 21, which is conducive to improving the stability of the electrical performance of the battery cell 20.

The third insulating member 27 and the first insulating member 23 may only be in contact with each other. For example, when the surface of the third insulating member 27 facing away from the first insulating member 23 abuts against the inner surface 2121 of the second wall, the second wall 212 and the first insulating member 23 jointly clamp the third insulating member 27.

In some embodiments, the third insulating member 27 is connected to the surface of the first insulating member 23 facing the second wall 212.

For example, the third insulating member 27 may be adhered to the surface of the first insulating member 23 facing the second wall 212 through an adhesive layer, thereby implementing the connection and fixation of the third insulating member 27 to the surface of the first insulating member 23 facing the second wall 212.

The third insulating member 27 is connected to the first insulating member 23, which can improve the stability of the third insulating member 27 relative to the first insulating member 23 and reduce the risk of the movement of the third insulating member 27 between the first insulating member 23 and the second wall 212.

In some other embodiments, the third insulating member 27 and the first insulating member 23 may alternatively be integrally formed, for example, formed by an integral molding method such as injection molding and stamping.

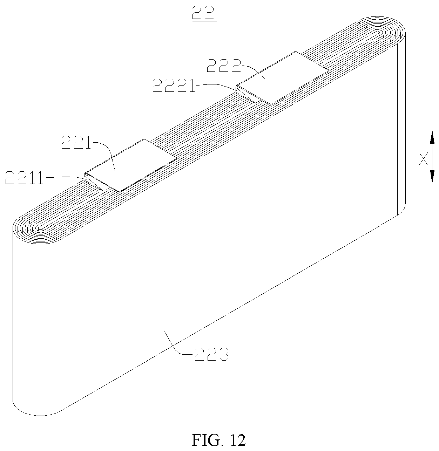

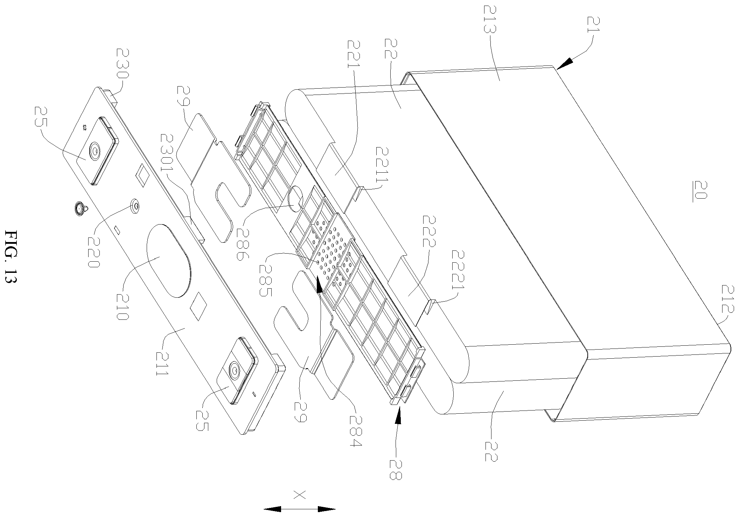

As shown in FIGs. 12 and 13, in some embodiments, the electrode assembly 22 includes a first tab 221 and a second tab 222 with opposite polarities, and in the first direction X, the first tab 221 and the second tab 222 are located on a side of the electrode assembly 22 facing away from the second wall 212.

The first tab 221 and the second tab 222 are the positive tab and negative tab described above. The first tab 221 and the second tab 222 are located on a same side of the electrode assembly 22 in the first direction X. In these embodiments, both the first tab 221 and the second tab 222 are located on the side of the electrode assembly 22 facing the first wall 211, facilitating electrical connection between the electrode terminals 25 provided on the first wall 211 and the first tab 221 and the second tab 222.

Both the first tab 221 and the second tab 222 are located on the side of the electrode assembly 22 facing away from the second wall 212, which is conducive to the output of electrical energy of the battery cell 20 from the first tab 221 and the second tab 222 separately, and can also minimize a size of the electrode assembly 22 in the first direction X.

Certainly, in some other embodiments, the first tab 221 and the second tab 222 may alternatively be located on the side of the electrode assembly 22 facing the second wall 212 in the first direction X. In this case, the tab can extend to the side of the electrode assembly 22 facing the first wall 211 and be electrically connected to the electrode terminal 25.

Certainly, in some other embodiments, the first tab 221 and the second tab 222 may alternatively be arranged in other ways. For example, one of the first tab 221 and the second tab 222 is located on the side of the electrode assembly 22 facing the first wall 211 and the other is located on a side of the electrode assembly 22 in the second direction.

Still referring to FIGs. 12 and 13, in some embodiments, the electrode assembly 22 further includes a main body portion 223, and both the first tab 221 and the second tab 222 protrude from the main body portion 223; and the battery cell 20 further includes a support member 28, where the support member 28 is arranged between the first wall 211 and the main body portion 223.

Portions of the positive electrode plate and the negative electrode plate with active substances constitute the main body portion 223 of the electrode assembly 22.

The support member 28 may be an electrical insulating member. The support member 28 is arranged between the first wall 211 and the main body portion 223. The support member 28 can support the main body portion 223, so that the first wall 211 indirectly supports the main body portion 223 of the electrode assembly 22. The provision of the support member 28 can relieve the stress on the first wall 211.

The support member 28 is arranged between the first wall 211 and the main body portion 223, where the support member 28 is conducive to limiting the electrode assembly 22 and can reduce the risk of the movement of the electrode assembly 22 in the housing. In a case that both the first tab 221 and the second tab 222 protrude from the main body portion 223 and face the first wall 211, the support member 28 can also reduce the risk of the tab being inserted backward into the main body portion 223, thereby reducing the risk of a short circuit of the battery cell 20.

As shown in FIGs. 13, 14, and 15, in some embodiments, the support member 28 supports the main body portion 223, and both the first tab 221 and the second tab 222 are bent around an edge of the support member 28 to a side of the support member 28 facing away from the main body portion 223 and are electrically connected to the electrode terminal 25.

The first tab 221 and the second tab 222 protrude from the side of the main body portion 223 facing the first wall 211. In the first direction X, a portion of the first tab 221 is located on a side of the support member 28 facing the main body portion 223, while another portion of the first tab 221 is bent around the edge of the support member 28 to a side of the support member 28 facing the first wall 211. The portion of the first tab 221 on the side of the support member 28 facing the first wall 211 is electrically connected to a current collecting member 29, and one of the two electrode terminals 25 is electrically connected to the first tab 221 via the current collecting member 29. In the first direction X, a portion of the second tab 222 is located on the side of the support member 28 facing the main body portion 223, while another portion of the second tab 222 is bent around the edge of the support member 28 to the side of the support member 28 facing the first wall 211. The portion of the second tab 222 on the side of the support member 28 facing the first wall 211 is electrically connected to another current collecting member 29, and the other of the two electrode terminals 25 is electrically connected to the second tab 222 via the current collecting member 29.

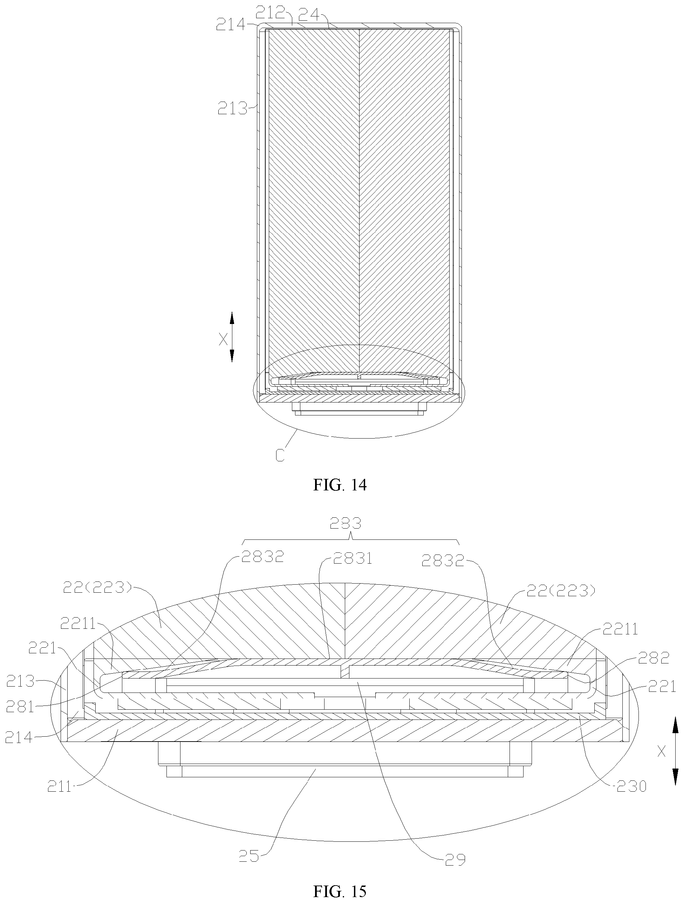

The first tab 221 and the second tab 222 of a same electrode assembly 22 may be bent around a same edge of the support member 28 or around different edges of the support member 28. In FIGs. 13 and 14, the battery cell 20 includes two electrode assemblies 22. The first tab 221 and the second tab 222 of one of the two electrode assemblies 22 are bent around a first edge 281 of the support member 28, and the first tab 221 and the second tab 222 of the other of the two electrode assemblies 22 are bent around a second edge 282 of the support member 28. The first edge 281 and the second edge 282 are arranged opposite each other in a stacking direction of the two electrode assemblies 22.

The first tab 221 and the second tab 222 are bent around the edge of the support member 28 to a side of the support member 28 facing away from the main body portion 223. The support member 28 provides support for the first tab 221 and the second tab 222, preventing the first tab 221 and the second tab 222 from being inserted backward into the main body portion 223. The support member 28 supporting the main body portion 223 can limit the electrode assembly 22 in the housing, thereby reducing the degree of shaking of the electrode assembly 22 in the housing 21.

As shown in FIGs. 12, 13, and 15, the first tab 221 is formed by stacking and electrical connection of a plurality tabs with a same polarity. As a result, the first tab 221 has a relatively large size in a region close to the main body portion 223, that is, a first root region in FIG. 12. After the first tab 221 is bent around the edge of the support member 28, as shown in FIG. 15, the first tab root region 2211 is located on the side of the support member 28 facing the main body portion 223. Similarly, the second tab 222 is formed by stacking and electrical connection of a plurality tabs with a same polarity. As a result, the second tab 222 has a relatively large size in a region close to the main body portion 223, that is, a second root region in FIG. 12. After the second tab 222 is bent around the edge of the support member 28, as shown in FIG. 15, the second tab root region 2221 is located on the side of the support member 28 facing the main body portion 223.

As shown in FIG. 15, in some embodiments, in the first direction X, the support member 28 has a support surface 283 facing the main body portion 223 and abutting against the main body portion 223. The support surface 283 includes a support part 2831 and two edge parts 2832. In a width direction of the support member 28, the two edge parts 2832 are connected to two side edges of the support part 2831 respectively. The edge part 2832 is inclined from the support part 2831 in a direction gradually approaching the first wall 211.

The support part 2831 of the support surface 283 directly abuts against the main body portion 223. A position of the edge part 2832 corresponds to a portion of a tab located at the support member 28 and facing the main body portion 223, that is, the edge part 2832 corresponds to the first tab root region 2211 and the second tab root region 2221. The edge part 2832 is inclined from the support part 2831 to a direction gradually approaching the first wall 211, so that a space between the edge part 2832 and the main body portion 223 can match a volume of the portion of the tab located at the support member 28 and facing the main body portion 223, that is, the space between the edge part 2832 and the main body portion 223 can match a volume of the first tab root region 2211 and a volume of the second tab root region 2221. Both the first tab root region 2211 and the second tab root region 2221 abut against the edge part 2832, so as to indirectly abut against the main body portion 223. The support part 2831 and the edge part 2832 jointly support the main body portion 223 of the electrode assembly 22, thereby limiting the electrode assembly 22 and preventing the first tab 221 and the second tab 222 from being inserted backward into the main body portion 223. The support part 2831 may be formed by thinning the side of the support member 28 facing the main body portion 223 and the positions corresponding to the first tab root region 2211 and the second tab root region 2221.

In some embodiments, the first wall 211 is further provided with at least one of a pressure relief mechanism 210 and an electrolyte injection hole 220.

The pressure relief mechanism 210 is configured to relieve internal pressure of the battery cell 20. For example, when the internal pressure or temperature of the battery cell 20 reaches a threshold, the pressure relief mechanism 210 is activated to relieve the internal pressure of the battery cell 20. The pressure relief mechanism 210 may be in a form of an explosion-proof valve, an explosion-proof plate, a gas valve, a pressure relief valve, a safety valve, or the like, and may specifically employ an element or part sensitive to pressure or temperature. To be specific, when the internal pressure or temperature of the battery cell 20 reaches a predetermined threshold, the pressure relief mechanism 210 performs an action or a weak structure provided in the pressure relief mechanism 210 is destroyed, thereby forming an opening or a channel for releasing the internal pressure or temperature.

The electrolyte injection hole 220 is a channel for injecting electrolyte into the battery cell 20.

The first wall 211 may be provided with a pressure relief mechanism 210, and provided with no electrolyte injection hole 220. Alternatively, the first wall 211 may be provided with an electrolyte injection hole 220 and provided with no pressure relief mechanism 210. Alternatively, the first wall 211 may be provided with both a pressure relief mechanism 210 and an electrolyte injection hole 220.

At least one of the pressure relief mechanism 210 and the electrolyte injection hole 220 is provided on the first wall 211, so that structures of the battery cell 20 are more concentrated, which facilitates manufacturing and is conducive to improving production efficiency.

In some embodiments, a fourth insulating member 230 is provided on the side of the first wall 211 facing the electrode assembly 22, and the fourth insulating member 230 is configured to insulate and isolate the first wall 211 from the electrode assembly 22. In the first direction X, the support member 28 is located between the main body portion 223 and the fourth insulating member 230.

In the embodiments where the first wall 211 is provided with the pressure relief mechanism 210, a convex part 2301 protruding along a direction facing the electrode assembly 22 is formed at a position corresponding to the pressure relief mechanism 210 on the fourth insulating member 230. The surface of the support member 28 facing the first wall 211 is further provided with an accommodating part 284, and the convex part 2301 is at least partially accommodated in the accommodating part 284. The convex part 2301 is accommodated in the accommodating part 284, and the convex part 2301 cooperates with the accommodating part 284 to limit the support member 28 and prevent the support member 28 from moving in the housing 21.

In the first direction X, the convex part 2301 may abut against a bottom surface of the accommodating part 284, which limits the movement of the support member 28 along a direction away from the main body portion 223, ensuring that the support member 28 can stably support the main body portion 223, so that the weight of the main body portion 223 of the electrode assembly 22 will not be easily transmitted to the tab when the battery cell 20 is inverted, which is less likely to cause forked insertion of the tab.

In the embodiments where the first wall 211 is provided with the pressure relief mechanism 210, in the first direction X, a plurality of degassing holes 285 are provided in a region of the support member 28 corresponding to the pressure relief mechanism 210. The degassing holes 285 allow gas inside the battery cell 20 to flow to the pressure relief mechanism 210 through the degassing holes 285, so that the pressure in the battery cell 20 can be relieved via the pressure relief mechanism 210 when the pressure reaches a bursting pressure. In the first direction X, the plurality of degassing holes 285 are evenly distributed within a projection range of the pressure relief mechanism 210 on the support member 28, which is conducive to the smooth flow of gas in the battery cell 20 to the pressure relief mechanism 210 through the degassing holes 285.

In the embodiments where the first wall 211 is provided with the electrolyte injection hole 220, the support member 28 is provided with a through hole 286, where the through hole 286 corresponds to a position of the electrolyte injection hole 220 to facilitate electrolyte injection. In some embodiments, the through hole 286 may be provided at a position offset from the center of the support member 28. When the support member 28 is installed on an integral structure formed by the first wall 211 and the fourth insulating member 230, the through hole 286 can play a foolproof role, reducing the risk of wrong installation to some extent.

An embodiment of this application further provides a battery 100, where the battery 100 includes the battery cell 20 according to any one of the foregoing embodiments.

The battery 100 mentioned in this embodiment of this application is a single physical module that includes one or more battery cells 20 for providing a higher voltage and capacity. For example, the battery 100 mentioned in this application may include a battery 100 module, a battery 100 pack, or the like. Generally, a battery 100 pack includes a box 10 configured to package one or more battery cells 20. The box 10 can prevent liquids or other foreign matter from affecting charging or discharging of the battery cell 20.

In the battery cell 20 according to any one of the foregoing embodiments, the gap 24 is formed between the side of the first insulating member 23 facing away from the electrode assembly 22 and the inner surface 2121 of the second wall, where the first insulating member 23 abuts against the end of the electrode assembly 22 facing the second wall 212. Therefore, without the need to provide the bottom support plate at the end of the electrode assembly 22 facing away from the first wall 211, a degree of pressing and contact between the electrode assembly 22 and the corner region 2151a of the side of the housing 21 facing away from the electrode terminal 25 can be reduced or the electrode assembly 22 can be prevented from coming into contact with and being pressed by the corner region 2151a of the housing 21, thereby reducing the risk of the electrode plate of the electrode assembly 22 being pressed and wrinkled by the corner region 2151a of the housing 21 due to pressing between the electrode assembly 22 and the corner region 2151a of the housing 21. Consequently, the risk of a short circuit of the battery cell 20 is reduced, improving the safety performance of the battery 100. When the battery cell 20 is not provided with the bottom support plate, the assembly process of the battery cell 20 can be simplified, the assembly efficiency can be improved, the cost of the battery cell 20 can be reduced, and the weight of the battery cell 20 can be reduced, which can consequently reduce the weight of the battery 100.

An embodiment of this application further provides an electric device, where the electric device includes the battery 100 according to any of the foregoing embodiments.

The battery 100 supplies electrical energy to the electric device. The safety performance of the battery 100 in the foregoing embodiment is better, thus the electrical safety of the electrical device having the battery 100 can be improved.

An embodiment of this application provides a battery cell 20, where the battery cell 20 includes a housing 21, an electrode assembly 22, a first insulating member 23, a second insulating member 26, and a support member 28. The electrode assembly 22 is accommodated in the housing 21.

The housing 21 includes a first wall 211, a second wall 212, a side wall 213, and a connecting wall 215. The second wall 212, the side wall 213, and the connecting wall 215 are integrally formed. An inner surface of the connecting wall 215 is a chamfered face 2151, where the chamfered face 2151 is an arc chamfered face 2151. An inner surface 2121 of the second wall and an inner surface 2131 of the side wall are connected through the chamfered face 2151 and are tangent to the chamfered face 2151. An opening 214 is formed at an end of the side wall 213 facing away from the second wall 212, and the first wall 211 covers the opening 214 and supports the electrode assembly 22. The first wall 211 and the second wall 212 are disposed opposite each other in the first direction X. The first wall 211 is further provided with a pressure relief mechanism 210, an electrolyte injection hole 220, and two electrode terminals 25. Both the first tab 221 and the second tab 222 of the electrode assembly 22 protrude from a side of a main body portion 223 of the electrode assembly 22 facing the first wall 211. The support member 28 is located between the main body portion 223 and the first wall 211, the support member 28 supports the main body portion 223, and both the first tab 221 and the second tab 222 are bent around an edge of the support member 28 to a side of the support member 28 facing away from the main body portion 223. In the first direction X, the first insulating member 23 is connected to an end of the electrode assembly 22 facing the second wall 212 to insulate and isolate the second wall 212 from the electrode assembly 22, and the second insulating member 26 surrounds a periphery of the electrode assembly 22 to insulate and isolate the electrode assembly 22 from the side wall 213. The second insulating member 26 and the first insulating member 23 are integrally formed. In the first direction X, a gap 24 is formed between a surface of the first insulating member 23 facing away from the electrode assembly 22 and the inner surface 2121 of the second wall. In the first direction X, a size of the chamfered face 2151 is H, and a size of the gap 24 is H₁, satisfying H₁ ≥ H/2.

The foregoing embodiments are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising:
a housing, comprising a first wall and a second wall disposed opposite each other in a first direction, wherein the first wall is provided with an electrode terminal;
an electrode assembly, accommodated in the housing, wherein the electrode assembly is electrically connected to the electrode terminal, and the first wall supports the electrode assembly; and
a first insulating member, abutting against an end of the electrode assembly facing the second wall to insulate and isolate the second wall from the electrode assembly,
wherein in the first direction, a gap is formed between a surface of the first insulating member facing away from the electrode assembly and an inner surface of the second wall.

2. The battery cell according to claim 1, wherein:
the housing further comprises a side wall, and the side wall surrounds a periphery of the second wall;
in the first direction, the second wall is located at one end of the side wall, an opening is formed at another end of the side wall, and the first wall closes the opening; and
the inner surface of the second wall is connected to an inner surface of the side wall through a chamfered face.

3. The battery cell according to claim 2, wherein in the first direction, a size of the chamfered face is H, and a size of the gap is H₁, satisfying H₁ ≥ H/2.

4. The battery cell according to claim 3, wherein H₁ ≥ H.

5. The battery cell according to any one of claims 2 to 4, wherein the chamfered face is an arc chamfered face.

6. The battery cell according to claim 5, wherein:
the inner surface of the second wall is tangent to the chamfered face; and/or
the inner surface of the side wall is tangent to the chamfered face.

7. The battery cell according to any one of claims 2 to 6, wherein the side wall and the second wall are integrally formed.

8. The battery cell according to any one of claims 2 to 7, wherein the battery cell further comprises a second insulating member, at least a part of the second insulating member is arranged between the side wall and the electrode assembly, and the second insulating member is configured to insulate and isolate the side wall from the electrode assembly.

9. The battery cell according to claim 8, wherein the first insulating member and the second insulating member are integrally formed.

10. The battery cell according to any one of claims 1 to 9, wherein:
the battery cell further comprises a third insulating member;
in the first direction, the third insulating member abuts against a side of the first insulating member facing the second wall; and
in a direction perpendicular to the first direction, the first insulating member protrudes from an edge of the third insulating member.

11. The battery cell according to claim 10, wherein the third insulating member is connected to a surface of the first insulating member facing the second wall.

12. The battery cell according to any one of claims 1 to 11, wherein the electrode assembly comprises a first tab and a second tab with opposite polarities, and in the first direction, the first tab and the second tab are located on a side of the electrode assembly facing away from the second wall.

13. The battery cell according to claim 12, wherein:
the electrode assembly further comprises a main body portion, and both the first tab and the second tab protrude from the main body portion; and
the battery cell further comprises a support member, and the support member is arranged between the first wall and the main body portion.

14. The battery cell according to claim 13, wherein the support member supports the main body portion, and both the first tab and the second tab are bent around an edge of the support member to a side of the support member facing away from the main body portion and are electrically connected to the electrode terminal.

15. The battery cell according to any one of claims 1 to 14, wherein the first wall is further provided with at least one of a pressure relief mechanism and an electrolyte injection hole.

16. A battery, comprising the battery cell according to any one of claims 1 to 15.

17. An electric device, comprising the battery according to claim 16.
